# EUROPÄISCHE PATENTANMELDUNG

(11) **EP 3 566 858 A1**
(43) Veröffentlichungstag der Anmeldung: **13.11.2019**
(21) Anmeldenummer: 19170155.6
(22) Anmeldetag: 18.04.2019
(51) Int. Cl.: B29C 65/00, B29C 65/26, B29C 65/18, B29C 65/30, B29C 65/32, B29C 64/321, B29C 64/147, B29C 64/295, B25J 15/06

(54) **VORRICHTUNG ZUM HANDHABEN UND LOKALEN FIXIEREN**

(30) Priorität: 07.05.2018 AT 503802018
(71) Anmelder: ENGEL AUSTRIA GmbH, 4311 Schwertberg (AT)
(72) Erfinder: MÜLLER, Norbert, 94032 Passau (DE); SEINSCHE, Philipp, 4020 Linz (AT)
(74) Vertreter: Torggler & Hofinger Patentanwälte

(57) **Zusammenfassung**

Vorrichtung zum Handhaben und lokalen Fixieren von flächigen thermoplastischen Materialien (3), mit wenigstens einer Haltevorrichtung (1), welche mit einem Haltebereich (4) zur Ausübung einer Haltekraft an einer Oberfläche des flächigen thermoplastischen Materials (3) anlegbar ist, wobei innerhalb oder umgeben durch den Haltebereich (4) der wenigstens einen Haltevorrichtung (1) zumindest ein Heizelement (2) angeordnet ist, durch welches das flächige thermoplastische Material (3) innerhalb oder umgeben durch den Haltebereich (4) der wenigstens einen Haltevorrichtung (1) an einem Fügepartner (5) lokal thermisch fixierbar ist.

## Beschreibung

Die vorliegende Erfindung betrifft eine Vorrichtung zum Handhaben und lokalen Fixieren von flächigen thermoplastischen Materialien mit den Merkmalen des Oberbegriffs des Anspruchs 1, eine Anordnung von wenigstens zwei Vorrichtungen zum Handhaben und lokalen Fixieren von flächigen thermoplastischen Materialien und ein Handhabungsgerät zum Aufnehmen, Transportieren und/oder Ablegen wenigstens eines flächigen thermoplastischen Materials.

Um das Leichtbaupotenzial von Faserverbundwerkstoffen optimal nutzen zu können, ist eine last- und verschnittoptimierte Anordnung der Verstärkungsfasern im Bauteil unerlässlich. Die additive Fertigung - also das sukzessive "Ablagern" von Material zu einem definierten Volumenkörper - hat sich gerade im Bereich der Faserverbundwerkstoffe als eine sehr materialgerechte Verarbeitungsvariante erwiesen. Das "Ablagern" von Material, im Speziellen von flächigen thermoplastischen Materialien, kann beispielsweise durch das sogenannte Pick-and-Place-Verfahren realisiert werden. Bei diesem Verfahren werden mit Hilfe von Handhabungsgeräten flächige thermoplastische Materialien, bevorzugt mit einer Faserverstärkung, besonders bevorzugt mit einer unidirektionalen Faserverstärkung, aus einem Speicher oder Magazin aufgenommen, zu einer zuvor definierten Ablageposition transportiert und dort abgelegt. Ein solches Handhabungsgerät besteht aus einer Bewegungseinheit, wie beispielsweise einem Knickarmroboter und einem Endeffektor, welcher abhängig vom handzuhabenden flächigen thermoplastischen Materialien mit Klemm-, Nadel-, Sauggreifer oder Ähnlichen ausgestattet sein kann. Sauggreifer, auch Unterdruckhandhabungseinrichtungen genannt, werden beispielsweise durch die DE 20 2013 009294 U1 oder die DE 10 2009 047916 B4 beschrieben. Es werden dabei je nach Anforderung unterschiedliche Wirkprinzipien zur Generierung des Vakuums (Coanda-, Venturi- oder Bernoulli-Prinzip) verwendet. Solche Greifsysteme haben sich für die Handhabung von dünnen, flächigen Materialien durchgesetzt, da sie das flächige thermoplastische Material sicher auf Position halten, ohne dass es dabei - wie im Falle von Nadelgreifern - geschädigt wird.

Weitere aus dem Stand der Technik bekannte Sauggreifer oder Unterdruckfixierungsvorrichtungen gehen aus der DE 4127133 A1, der EP 0 397 029 A2, der DE 20 2012 101 859 U1 und aus der DE 2 535 460 A1 hervor, wobei diese Vorrichtungen über Temperiereinheiten verfügen, um den Greifer an eine Temperatur des zu greifenden Materials anzupassen. Aus der WO 2010/073 514 A1 ist ein elektrostatischer Greifer mit einer solchen Temperiereinheiten bekannt. Diese Temperierung des Greifers soll eine Beschädigung des zu greifenden Materials durch Wärmespannungen oder ein Bilden von Kondensat zwischen dem Greifer und dem zu greifenden Material vermeiden.

Nachdem das zu verarbeitende flächige thermoplastische Material durch das Handhabungsgerät an seinem vorbestimmten Ort platziert wurde, muss es für die weitere Verarbeitung in irgendeiner Weise gegen ein Verrutschen gesichert werden. Dies geschieht bei thermoplastischen Materialien meist mittels einer stoffschlüssigen Verbindung zwischen dem bereits abgelegten Substrat - im folgenden auch Fügepartner genannt - und dem darauf abgelegten flächigen thermoplastischen Material. Für die Herstellung der Verbindung wird die Aufschmelzbarkeit des flächigen thermoplastischen Materials ausgenutzt. Die dazu notwendige Energie kann durch ein Heizelement, beispielsweise mit einer Widerstandsheizung oder durch eine Ultraschall-Sonotrode zugeführt werden. Die beiden Komponenten (flächiges thermoplastisches Material und Fügepartner) werden aneinandergedrückt und miteinander verschweißt.

Das Wärmekontakt- oder das Wärmeimpulsschweißverfahren ist in der Verpackungsindustrie ein etabliertes Verfahren zum Verschweißen von dünnen Folien mit hoher Taktzeit. Da im Pick-and-Place-Verfahren ebenfalls folienartige Halbzeuge (flächige thermoplastische Materialien) verarbeitet werden, eignen sich diese Schweißverfahren zur Herstellung einer stoffschlüssigen Verbindung zwischen Fügepartner und thermoplastischem Material. Dazu werden meist elektrische beheizbare Heizelemente verwendet, welche unmittelbar nach der Positionierung des Halbzeuges auf dem flächigen thermoplastischen Material einen Druck ausüben und durch Wärmezufuhr das flächige thermoplastische Material mit dem Fügepartner verbinden.

Eine andere bekannte Ausführungsform des Standes der Technik sieht vor, dass an der Haltevorrichtung, welche mit einem Haltebereich zur Ausübung einer Haltekraft an eine Oberfläche des flächigen thermoplastischen Materials anlegbar ist, separat von dieser Halteeinheit ein Heizelement angebracht wird, wobei nach Positionierung durch das Heizelement eine Verschweißung durchgeführt werden kann. Für die Montage der beiden Komponenten auf dem Endeffektor ist es jedoch erforderlich, diese an die Geometrie des handzuhabenden flächigen thermoplastischen Materials anzupassen. Daraus resultiert jedoch ein erhöhter Anpassungsbedarf bei einer etwaigen Änderung der Geometrie des flächig ausgebildeten thermoplastischen Materials, da sowohl für das Halteelement als auch für das Heizelement eine neue Position gewählt werden muss. Zudem ist für das Halteelement als auch das Heizelement eine eigene Befestigung am Endeffektor vorzusehen, was hinsichtlich Gewichtseinsparung und der damit einhergehenden Agilität des gesamten Systems nachteilig ist.

Somit ist für die Anordnung des Halteelementes sowie des Heizelementes ein erhöhter Bauraum notwendig. Dies begrenzt einerseits die maximale Anzahl der Halteelemente und/oder Heizelemente, welche auf einem Endeffektor untergebracht werden können und erhöht andererseits die minimale handhabbare Größe für flächige thermoplastische Materialien.

Zudem leidet durch die zuvor genannte Anordnung der zwei Elemente zudem die erreichbare Ablagegenauigkeit eines flächigen thermoplastischen Materials. Bei größeren Abständen zwischen Halte- und Heizelement steigt die Wahrscheinlichkeit, dass die Fixierungsposition des flächigen thermoplastischen Materials aufgrund der nicht vorhandenen Führung von der Sollposition abweicht. Dadurch können Gassen oder auch Überlappungen entstehen, welche im späteren Bauteil eine Schwachstelle darstellen.

Dadurch, dass beim Stand der Technik das Heizelement erst unmittelbar nach Erreichen der finalen Position des flächigen thermoplastischen Materials auf Kontakt fährt, um dies zu verschweißen, sind für kurze Schweißzeiten sehr hohe Heiztemperaturen notwendig, sodass das abzulegende flächige thermoplastische Material rasch über seine gesamte Dicke vollständig aufgeschmolzen und somit eine Verschweißung mit dem Fügepartner erzielt werden kann.

Aufgabe der Erfindung ist es, eine Vorrichtung zum Handhaben und lokalen Fixieren von flächigen thermoplastischen Materialien, eine Anordnung von wenigstens zwei Vorrichtungen zum Handhaben und lokalen Fixieren von flächigen thermoplastischen Materialien und ein Handhabungsgerät bereitzustellen, bei welchen gegenüber den zuvor genannten Nachteilen des Standes der Technik zumindest teilweise eine Verbesserung erreicht wird.

Diese Aufgabe wird durch eine Vorrichtung mit den Merkmalen des Anspruchs 1, einer Anordnung mit den Merkmalen des Anspruchs 10 und einem Handhabungsgerät mit den Merkmalen des Anspruchs 13 gelöst. Vorteilhafte Ausführungsformen sind in den abhängigen Ansprüchen definiert.

Erfindungsgemäß ist vorgesehen, dass innerhalb oder umgeben durch den Haltebereich der wenigstens einen Haltevorrichtung zumindest ein Heizelement angeordnet ist, durch welches das flächige thermoplastische Material innerhalb oder umgeben durch den Haltebereich der wenigstens einen Haltevorrichtung an einem Fügepartner lokal thermisch fixierbar ist.

So kann in einer bespielhaften Ausführungsvariante das Heizelement in die Haltevorrichtung, genauer gesagt, in den Haltebereich, integriert sein. Das Einbringen der notwendigen Heizenergie kann elektrisch oder induktiv erfolgen. Auch eine Ausführung mit einer Beheizung durch Heißgas ist durchaus vorstellbar. Ebenso sind Ausführungen mit einer Ultraschall-Sonotrode denkbar.

Erfindungsgemäß ist es somit vorgesehen, dass das zumindest eine Heizelement innerhalb eines Haltebereiches oder durch einen Haltbereich umgeben angeordnet ist. Anders ausgedrückt ist das Heizelement in das Halteelement integriert und somit kann durch die erfindungsgemäße Vorrichtung die Funktionen des Handhabens und des lokalen thermischen Fixierens in einer Anlagekomponente kombiniert werden.

Somit wird eine kompakte Vorrichtung zum Handhaben und thermischen Fixieren bereitgestellt, welche einen geringen Platzbedarf aufweist und eine geringe Gewichtskraft im Vergleich zu den zuvor genannten Ausführungsvarianten des Standes der Technik aufweist. Somit sinkt das Gewicht und damit die Trägheit des gesamten Handlingsystems, was wiederum zur Erhöhung der Flexibilität und Agilität beiträgt.

Außerdem sind durch die erfindungsgemäße Vorrichtung wesentlich kleinere flächige thermoplastische Materialien im Vergleich zu den im Stand der Technik bekannten Ausführungsvarianten handhabbar. Da das Heizelement nun innerhalb oder umgeben durch den Haltebereich angeordnet ist, wird die minimale Größe eines flächigen thermoplastischen Materials nur noch auf die Größe des Haltebereichs begrenzt.

Ein weiterer wesentlicher Vorteil der erfindungsgemäßen Vorrichtung ist die Gewährleistung einer hohen Ablagegenauigkeit. Aufgrund der Integration des Heizelements in den Haltebereich wird das flächige thermoplastische Material genau dort thermisch fixiert, wo es durch den Haltebereich gehalten wird. Einem Verschieben des flächigen thermoplastischen Materials durch den Schweißvorgang und einer damit verbundenen Bildung von Gassen bzw. Überlappungen des flächigen thermoplastischen Materials kann dadurch effektiv entgegengewirkt werden.

Vorzugsweise kann es vorgesehen sein, dass das flächige thermoplastische Material in einem durch die wenigstens eine Haltevorrichtung gehaltenen Zustand an dem Fügepartner lokal thermisch fixierbar ist. In diesem Zusammenhang kann es vorgesehen sein, dass das flächige thermoplastische Material durch eine Haltekraft an der Haltevorrichtung gehalten wird, während das flächige thermoplastische Material an dem Fügepartner lokal thermisch fixierbar ist, ohne dass eine zusätzliche Druckkraft zwischen dem flächigen thermoplastischen Material und dem Fügepartner herrscht.

Es kann jedoch auch vorzugsweise vorgesehen sein, dass das flächige thermoplastische Material in einem durch die wenigstens eine Haltevorrichtung gehaltenen Zustand bereits vor dem Ablegen auf dem Fügepartner lokal aufgeheizt wird. Das Aufheizen an der Haltevorrichtung kann dabei bereits beim Aufnehmen, unmittelbar nach dem Aufnehmen, oder zu einem beliebigen Zeitpunkt während des Transports zum Fügepartner beginnen. Das flächige thermoplastische Material kann beim Erreichen des Fügepartners erwärmt, aber noch im Festkörperzustand, oder wahlweise auch bereits im geschmolzenen Zustand sein. Durch die Möglichkeit den Heizbeginn in dieser Weise vorzuverlegen kann das Heizelement bei niedrigerer Temperatur betrieben werden. Das wirkt sich positiv auf die Langlebigkeit der Vorrichtung aus und führt zu einer geringeren thermischen Belastung des flächigen thermoplastischen Materials.

Weiters kann es vorzugsweise vorgesehen sein, dass das zumindest eine Heizelement - vorzugsweise durch ein Federelement - bewegbar mit der wenigstens einen Haltevorrichtung verbunden ist. So kann beispielsweise ein Heizelement dermaßen an der Haltevorrichtung gelagert sein, dass während einer Handhabungsoperation das Heizelement in einem zurückgezogenen Zustand verharrt und erst wenn durch das Heizelement ein lokales thermisches Fixieren des flächigen thermoplastischen Materials erforderlich ist, das Heizelement an das thermoplastische Material herangeführt wird. Durch diese Ausgestaltung ist es möglich, das Heizelement in einem beheizten Zustand zu belassen und lediglich durch ein Verschieben des Heizelementes die thermische Energie, welche an das flächige thermoplastische Material übertragen wird, zu verändern. So kann es vorzugsweise vorgesehen sein, dass das flächige thermoplastische Material durch das zumindest eine Heizelement kontinuierlich oder intervallartig beheizbar ist.

Besonders bevorzugt kann vorgesehen sein, dass zwischen dem zumindest einen Heizelement und der wenigstens einen Haltevorrichtung zumindest bereichsweise eine isolierende Schicht vorgesehen ist. Durch diese isolierende Schicht kann die Haltevorrichtung vor thermischer Energie vom wenigstens einen Heizelement geschützt werden und mögliche Beschädigungen der Haltevorrichtung durch diese thermische Energie vermieden werden.

In einer weiteren Ausführungsform kann es vorgesehen sein, dass die wenigstens eine Haltevorrichtung als ein elektrostatischer Greifer ausgebildet ist, wobei durch wenigstens eine Aktivierungsvorrichtung eine elektrostatische Ladung einer Kontaktfläche des elektrischen Greifers aufbringbar oder veränderbar ist.

Alternativ kann es jedoch auch vorgesehen sein, dass die wenigstens eine Haltevorrichtung als ein Vakuum-Sauggreifer ausgebildet ist. Weiters kann es dabei vorgesehen sein, dass das zumindest eine Heizelement in einem Saugbereich des Vakuum-Sauggreifers angeordnet ist und/oder der Vakuum-Sauggreifer über eine Absaugvorrichtung verfügt, wobei durch die Absaugvorrichtung ein Unterdruck in einem Saugbereich des Vakuum-Sauggreifers erzeugbar ist. Diese Absaugvorrichtung kann beispielsweise durch das Coanda-, Venturi- oder Bernoulli-Prinzip verwirklicht werden.

Weiters wird für eine Anordnung von wenigstens zwei erfindungsgemäßen Vorrichtungen zum Handhaben und lokalen Fixieren von flächigen thermoplastischen Materialien Schutz begehrt, wobei die wenigstens zwei Vorrichtungen durch eine Trägerstruktur miteinander verbunden sind. Eine solche Trägerstruktur kann dabei ein- oder mehrteilig ausgeführt sein. Bevorzugt ist dabei vorgesehen, dass die wenigstens zwei Vorrichtungen dermaßen angeordnet sind, dass wenigstens ein flächiges thermoplastisches Material durch die wenigstens zwei Haltevorrichtungen einseitig kontaktierend entlang einer Fläche haltbar ist.

Besonders bevorzugt ist eine Steuer- oder Regeleinheit vorgesehen, wobei durch die Steuer- oder Regeleinheit jede Vorrichtung oder bei Vorliegen von mehr als zwei Vorrichtungen eine Gruppe an Vorrichtungen selektiv steuer- oder regelbar ist, wobei durch die Steuer- oder Regeleinheit wenigstens eine Haltevorrichtung selektiv steuer- oder regelbar ist und/oder wenigstens ein Heizelement selektiv steuer- oder regelbar ist. Dementsprechend kann individuell eine Gruppe oder eine einzelne Vorrichtung angesteuert werden, genauer gesagt, das Heizelement oder die Haltefunktion der einzelnen Vorrichtung oder Vorrichtungen. Durch eine solche Ausgestaltung ist es möglich, bei einer Anordnung von mehreren Vorrichtungen lediglich die Vorrichtungen anzusteuern, welche zur Handhabung oder thermischen Fixierung eines gewissen flächigen thermoplastischen Materials erforderlich sind. Dementsprechend ergibt sich eine hohe Flexibilität bezüglich der Außenkontur eines flächigen thermoplastischen Materials, bei dessen Handhabung oder lokalen Fixierung lediglich die Vorrichtungen, welche erforderlich sind, verwendet werden und die verbleibenden Vorrichtungen der Anordnung in einen nicht-aktiven Betriebszustand versetzt werden.

Darüber hinaus wird für ein Handhabungsgerät zum Aufnehmen, Transportieren oder Ablegen wenigstens eines flächigen thermoplastischen Materials mit wenigstens einer erfindungsgemäßen Vorrichtung und/oder einer erfindungsgemäßen Anordnung Schutz begehrt.

Weitere Einzelheiten und Vorteile der vorliegenden Erfindung werden anhand der
Figurenbeschreibung unter Bezugnahme auf die in den Figuren dargestellten Ausführungsbeispiele im Folgenden näher erläutert. Dabei zeigen:
   - Fig. 1a: eine erste Ausführungsvariante einer erfindungsgemäßen Vorrichtung,
   - Fig. 1b: eine isometrische Ansicht der Fig. 1a,
   - Fig. 2: eine zweite Ausführungsvariante einer erfindungsgemäßen Vorrichtung,
   - Fig. 3: eine dritte Ausführungsvariante einer erfindungsgemäßen Vorrichtung,
   - Fig. 4: eine vierte Ausführungsvariante einer erfindungsgemäßen Vorrichtung,
   - Fig. 5: eine fünfte Ausführungsvariante einer erfindungsgemäßen Vorrichtung,
   - Fig. 6a: ein sechstes Ausführungsbeispiel einer erfindungsgemäßen Vorrichtung,
   - Fig. 6b: eine isometrische Ansicht der Fig. 6a,
   - Fig. 7: eine beispielhafte erfindungsgemäße Anordnung,
   - Fig. 8: eine beispielhafte erfindungsgemäße Anordnung,
   - Fig. 9a, 9b: eine beispielhafte erfindungsgemäße Anordnung,
   - Fig. 10: ein Handhabungsgerät,
   - Fig. 11: ein In-Kontaktbringen einer erfindungsgemäße Vorrichtung mit einem flächigen thermoplastischen Material,
   - Fig. 12: ein Halten eines flächigen thermoplastischen Materials mittels einer erfindungsgemäße Vorrichtung,
   - Fig. 13: ein Abheben eines flächigen thermoplastischen Materials aus einem Magazin,
   - Fig. 14: ein In-Kontaktbringen zwischen einem Fügepartner und einem flächigen thermoplastischen Materials,
   - Fig. 15: ein Ausüben von thermischer Energie auf das flächige thermoplastische Material,
   - Fig. 16: das Ablösen der erfindungsgemäßen Vorrichtung von einem flächigen thermoplastischen Material,
   - Fig. 17: ein In-Kontaktbringen eines flächigen thermoplastischen Materials mit seinem Fügepartner im Magazin,
   - Fig. 18: das lokale Fixieren eines flächigen thermoplastischen Materials mit seinem Fügepartner, und
   - Fig. 19: das Abheben eines flächigen thermischen Materials samt seinem Fügepartner aus dem Magazin.

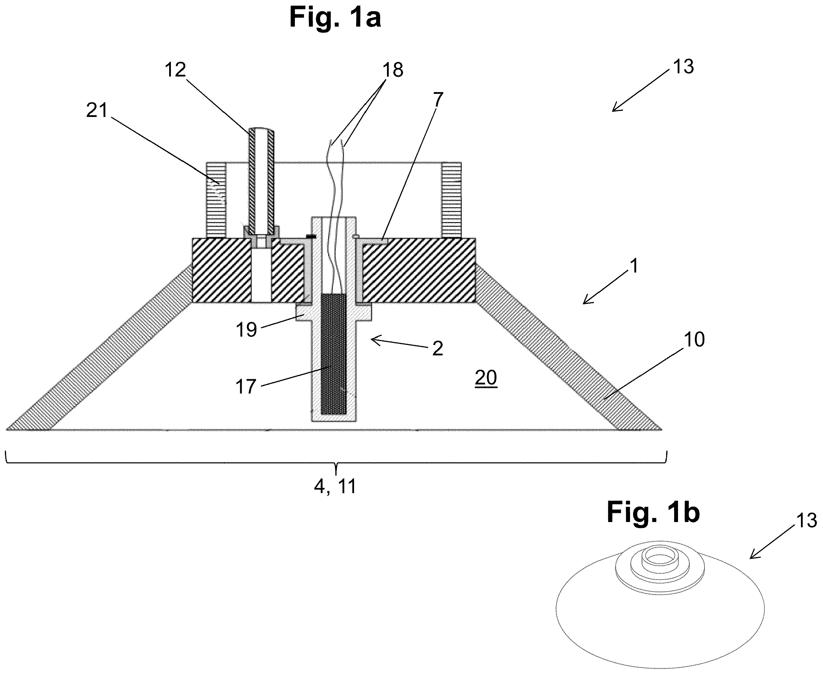

Fig. 1a zeigt eine erste Ausführungsform einer erfindungsgemäßen Vorrichtung 13 zum Handhaben und lokalen Fixieren von flächigen thermoplastischen Materialien 3. Dabei weist die Vorrichtung eine Haltevorrichtung 1 auf, welche als Vakuum-Sauggreifer 10 ausgeführt ist, und ein Heizelement 2. Das Heizelement 2 ist dabei in einem zentralen Bereich des Vakuum-Sauggreifers 10 angeordnet. Das Heizelement 2 selbst ist als Heizpatrone 17, welche über Stromkabel 18 mit Energie versorgt werden kann, ausgeführt. Diese Heizpatrone 17 ist innerhalb einer Aufnahmehülse 19 gelagert, die über eine isolierende Schicht 7 mit der Haltevorrichtung 1 verbunden ist. Die Haltevorrichtung 1 bildet einen inneren Raum 20, welcher mittels einer Absaugvorrichtung 12 vakuumiert werden kann, um ein flächiges thermoplastisches Material 3 in einem Saugbereich 11 oder auch Haltebereich 4 zu halten.

In Fig. 1b ist eine isometrische Ansicht der Vorrichtung 13 aus Fig. 1a dargestellt.

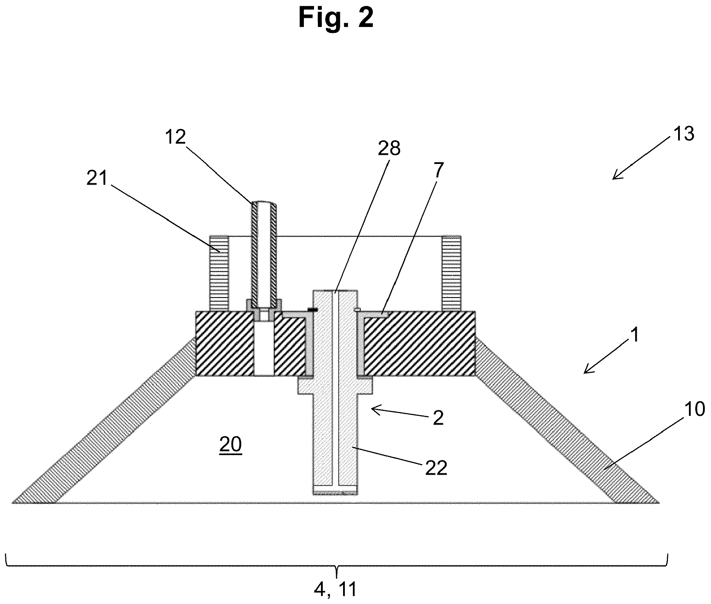

Fig. 2 zeigt eine zweite Ausführungsvariante einer erfindungsgemäßen Vorrichtung 13 zum Handhaben und lokalen Fixieren von flächigen thermoplastischen Materialien 3. Auch hier ist wiederum die Haltevorrichtung 1 als Vakuum-Sauggreifer 10 ausgebildet. Der Vakuum-Sauggreifer 10 kann wiederum durch die Absaugvorrichtung 12 in seinem inneren Raum 20 ein Vakuum erzeugen, um ein flächiges thermoplastisches Material 3 im Saugbereich 11 oder dem Haltebereich 4 zu halten. In diesem Ausführungsbeispiel ist jedoch das Heizelement 2 als Heißgasdüse 22 ausgebildet. Diese Heißgasdüse 22 ist wiederum in einem zentralen Bereich der Haltevorrichtung 1 angeordnet und über eine isolierende Schicht 7 mit der Haltevorrichtung 1, genauer gesagt, mit dem Vakuum-Sauggreifer 10 verbunden. Bei einer solchen Ausgestaltung kann mittels der Heißgasdüse 22, genauer gesagt, über den Zufuhrkanal 28 heißes Gas geführt werden, wobei durch dieses Heißgas das Heizelement 2, welches im Saugbereich 11, genauer gesagt, zentral im Haltebereich 4 angeordnet ist, erhitzt wird. Wie auch bereits schon in Fig. 1a ist eine Montagevorrichtung 21 vorgesehen, um die Vorrichtung 13 an einem Handhabungsgerät 16 oder einer Trägerstruktur 14 zu montieren.

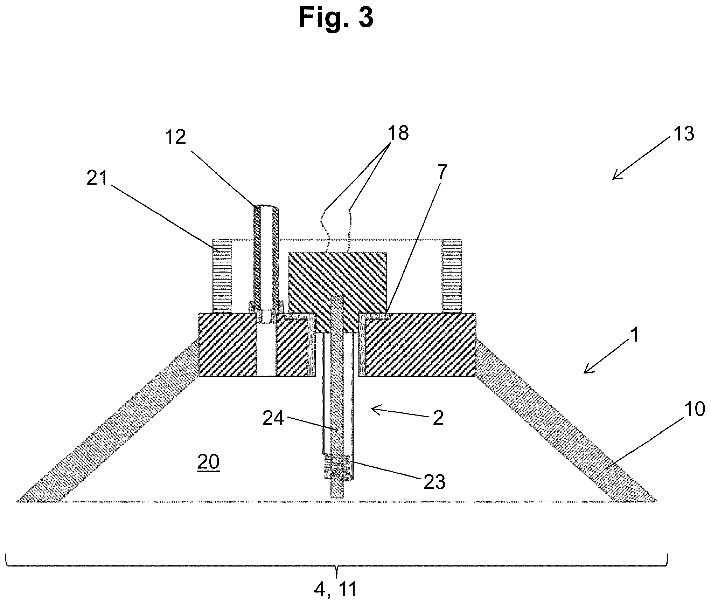

Fig. 3 zeigt ein drittes Ausführungsbeispiel einer erfindungsgemäßen Vorrichtung 13. Wie bereits in den vorangegangenen Figuren erläutert ist auch in diesem Ausführungsbeispiel die Haltevorrichtung 1 als Vakuum-Sauggreifer 10 ausgeführt, wobei über eine Absaugvorrichtung 12 ein Vakuum in einem inneren Raum 20 des Vakuum-Sauggreifers 10 erzeugbar ist. Die Heizvorrichtung 2 ist in diesem Ausführungsbeispiel als Induktionsspule 23 ausgeführt, welche mittels elektrischer Energie, welche der Induktionsspule 23 über die Stromkabel 18 zugeleitet wird, einen Heizstempel 24 erwärmen kann. Dieses Heizelement 2 ist wiederum mittels einer isolierenden Schicht 7 mit der Haltevorrichtung 1 verbunden. Durch dieses Heizelement 2 kann wiederum in späterer Folge ein flächiges thermoplastisches Material 3, welches im Haltebereich 4 des Vakuum-Sauggreifers 10 angeordnet ist, lokal erwärmt werden, um dieses flächige thermoplastische Material 3 an einem Fügepartner 5 lokal thermisch zu fixieren.

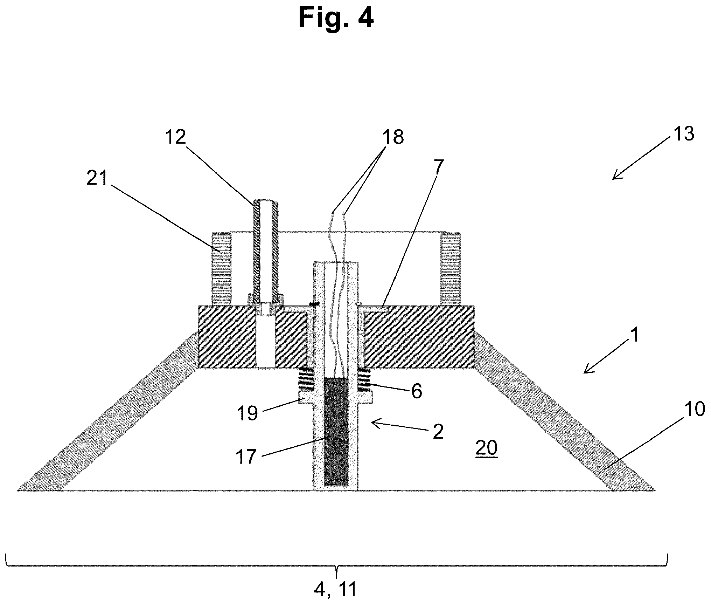

Fig. 4 zeigt ein weiteres Ausführungsbeispiel einer erfindungsgemäßen Vorrichtung 13. Die Vorrichtung 13 ist wiederum (ähnlich wie in Fig. 1 a) durch einen Vakuum-Sauggreifer 10 ausgebildet, welcher als Haltevorrichtung 1 fungiert und in dessen inneren Raum 20 durch die Absaugvorrichtung 12 ein Vakuum aufgebaut werden kann, um ein flächiges thermoplastisches Material 3 in einem Haltebereich 4, genauer gesagt, in einem Saugbereich 11 der Vorrichtung 13 zu halten. Das Heizelement 2 ist wiederum durch eine Heizpatrone 17 ausgeführt, welche in einer Aufnahmehülse 19 angeordnet ist, wobei die Aufnahmehülse 19 über eine isolierende Schicht 7 mit der Haltevorrichtung 1 verbunden ist. Die Heizpatrone 17 wird wiederum über Stromkabel 18 mit elektrischer Energie versorgt. Jedoch ist in diesem Ausführungsbeispiel das Heizelement 2 bewegbar mit der Haltevorrichtung 1 verbunden, genauer gesagt, ist das Heizelement 2 - die Aufnahme Hülse 19 - mit der Haltevorrichtung 1 über die Federelemente 6 verbunden und kann somit in ihrer axialen Richtung eine Bewegung ausführen. Diese Ausgestaltung mit dem Federelement 6 soll in späterer Folge sicherstellen, dass wenn durch den Vakuum-Sauggreifer 10 ein flächiges thermoplastisches Material 3 im Saugbereich 11 angesaugt wird, dieses flächige thermoplastische Material 3 nicht durch das Heizelement 2 plastisch verformt wird oder beschädigt wird, da sich die flexiblen Dichtlippen des Vakuum-Sauggreifers 10 meist leicht elastisch verformen können und es somit möglich wäre, dass wenn das Heizelement 2 axial nicht bewegbar wäre, dieses das aufzunehmende flächige thermoplastische Material 3 durchdringt oder verformt.

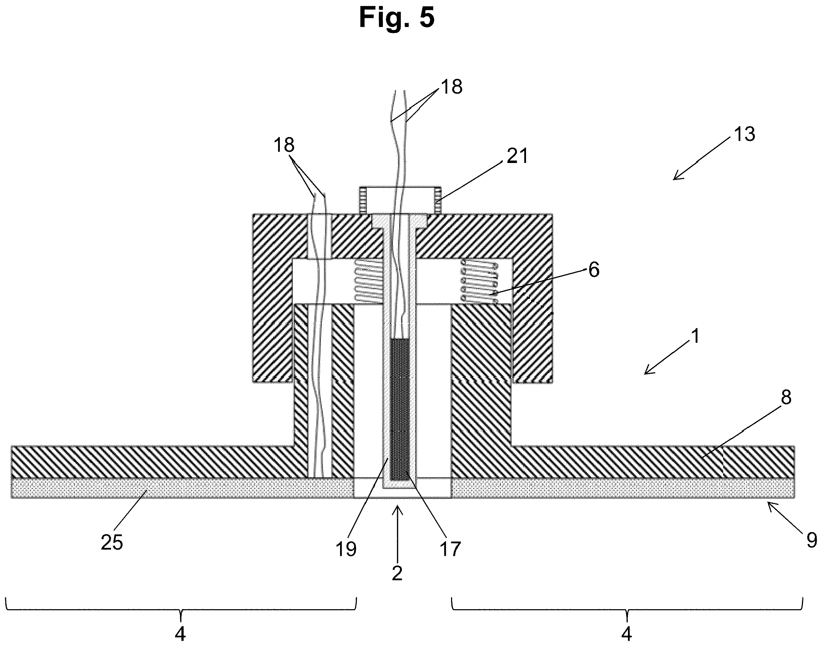

Fig. 5 zeigt ein fünftes Ausführungsbeispiel einer erfindungsgemäßen Vorrichtung 13, bei der die Haltevorrichtung 1 als sogenannter elektrostatischer Greifer 8 ausgebildet ist. Dieser elektrostatische Greifer 8 verfügt über eine Elektrostatikfolie 25, wobei diese Elektrostatikfolie 25 durch eine Aktivierungsvorrichtung (nicht dargestellt) eine elektrische Ladung an ihrer Kontaktfläche 9 verändern kann. Diese Aktivierungsvorrichtung kann über die Stromkabel 18 an die Elektrostatikfolie angeschlossen werden. Durch die Veränderung der elektrischen Ladung an der Kontaktfläche 9 kann der elektrostatische Greifer 8 ein mit der Kontaktfläche 9 kontaktiertes flächiges thermoplastisches Material 3 in den Haltebereichen 4 halten. Das Heizelement 2 ist in diesem Ausführungsbeispiel wiederum durch eine Heizpatrone 17 ausgebildet, welche mittels einer Aufnahmehülse 19 an der Haltevorrichtung 1 befestigt ist. Die Heizpatrone 17 kann wiederum durch die Stromkabel 18 mit elektrischer Energie versorgt werden. Gut erkennbar ist dabei in dieser Figur, wie das Heizelement 2 durch die Haltebereiche 4 umgeben ist. Die Vorrichtung 13 weist wiederum eine Montagevorrichtung 21 auf.

Des Weiteren ist in dem Ausführungsbeispiel der Fig. 5 die Haltevorrichtung 1 zweiteilig ausgebildet, wobei die zwei Teile mittels Federelementen 6 miteinander verbunden sind. So kann je nach Druckausübung über die Montagevorrichtung 21 ein Abstand zwischen dem Heizelement 2 und einem flächigen thermoplastischen Material 3, welches an der Kontaktfläche 9 anliegt, variiert werden. So ist es durchaus denkbar, dass das Heizelement 2 nicht nur intervallartig beheizbar ist (wobei das Heizelement 2 nur beheizt wird, wenn eine thermische Einwirkung auf das flächige thermoplastische Material 3 erforderlich ist) sondern auch durchgängig, das heißt kontinuierlich, beheizt wird. So kann je nachdem, ob aktuell eine thermische Einwirkung auf das flächige thermoplastische Material 3 erforderlich ist, der Abstand zwischen Heizelement 2 und flächigem thermoplastischen Material 3 verändert werden.

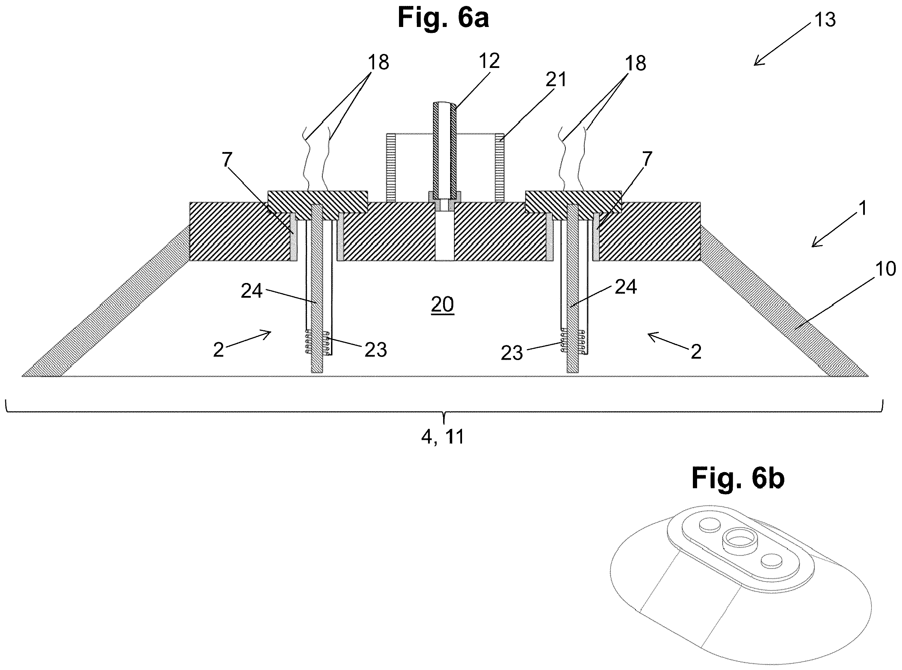

Fig. 6a zeigt eine weitere Ausführungsvariante einer erfindungsgemäßen Vorrichtung 13, wobei wiederum die Haltevorrichtung 1 als Vakuum-Sauggreifer 10 ausgebildet ist, dessen innerer Raum 20 durch eine Absaugvorrichtung 12 vakuumierbar ist, wodurch ein im Haltebereich 4 oder auch Saugbereich 11 angeordnetes flächiges thermoplastisches Material 3 an der Haltevorrichtung 1 gehalten werden kann. Die Vorrichtung 13 ist wiederum über eine Montagevorrichtung 21 montierbar.

Im Gegensatz zu den vorhergehenden Ausführungsvarianten weist die Ausführungsvariante der Fig. 6a jedoch zwei Heizelemente 2 auf. Diese zwei Heizelemente 2 sind als Induktionsspulen 23 mit Heizstempeln 24 ausgeführt (wie auch schon in Fig. 2 gezeigt).. Die Integration der anderen bereits angeführten Varianten der Heizelemente 2 sind bei dieser Ausführungsvariante der Haltevorrichtung 1 ebenfalls denkbar.

Fig. 6b zeigt eine isometrische Ansicht der Fig. 6a.

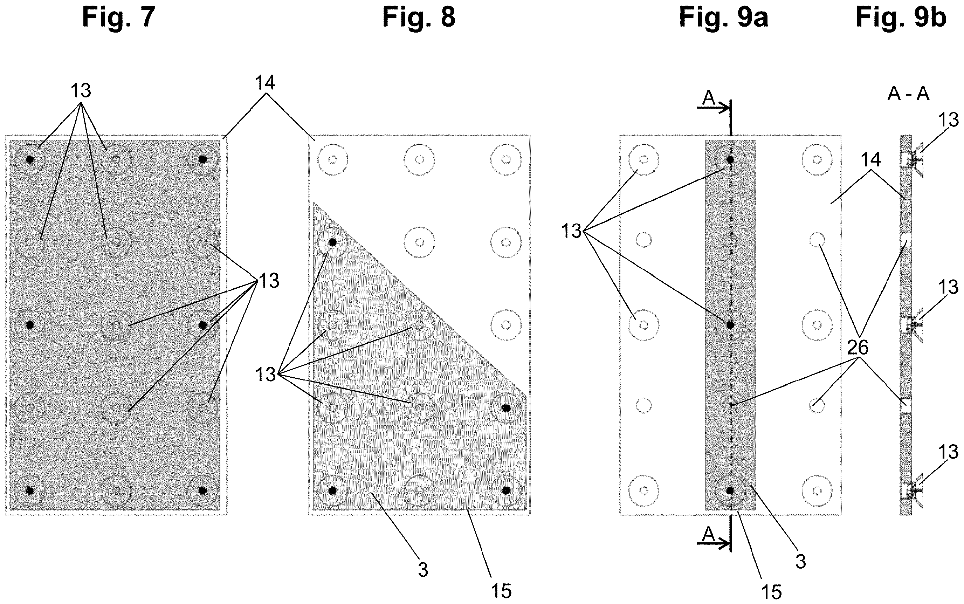

Fig. 7 zeigt eine beispielhafte, erfindungsgemäße Anordnung aus mehreren Vorrichtungen 13. Dabei sind die Vorrichtungen 13 an einer Trägerstruktur 14 angeordnet, welche in diesem Ausführungsbeispiel als Platte ausgeführt ist. Somit können durch mehrere Vorrichtungen 13 wenigstens ein flächiges thermoplastisches Material 3 einseitig kontaktierend entlang einer Fläche gehalten werden. Es ist nicht weiter erforderlich, dass jede Vorrichtung 13 über ein Heizelement 2 verfügt oder ein jedes Heizelement 2 einer jeden Vorrichtung 13 genützt wird. So kann es bei einer solchen Anordnung vorgesehen sein, dass nur ausgewählte Vorrichtungen 13 über ein Heizelement 2 verfügen oder die Heizelemente 2 nur ausgewählter Vorrichtungen 13 aktiviert werden. Diese ausgewählten Vorrichtungen 13 sind in dieser Figur mit einem schwarzen Punkt in der Mitte gekennzeichnet.

Es kann des Weiteren vorgesehen sein, dass eine Anordnung wie aus Fig. 7 über eine Steuer- oder Regeleinheit verfügt, welche selektiv einzelne Vorrichtungen 13 ansteuern kann oder eine Gruppe 15 aus Vorrichtungen 13 aller Vorrichtungen 13 ansteuern kann.

In Fig. 8 ist beispielhaft gezeigt, dass nur die Gruppe 15 an Vorrichtungen 13 durch die Steuer- oder Regelvorrichtung aktiviert werden. Die Gruppe 15 an Vorrichtungen 13 ist dabei in Fig. 8 durch eine graue Schattierung gekennzeichnet, wobei die graue Schattierung ein zu handhabendes, flächiges thermoplastisches Material 3 darstellt. Durch dieses selektive Ansteuern einer Gruppe 15 an Vorrichtungen 13 können die Vorrichtungen 13 der Anordnung an eine Geometrie eines flächigen thermoplastischen Materials 3 angepasst werden. Die Steuer- oder Regelvorrichtung kann dabei dermaßen ausgebildet sein, dass alle Halteelemente der Haltevorrichtung 1 der Vorrichtungen 13 der Gruppe 15 aktiviert werden und aus dieser Gruppe 15 nur einige (z.B. an den Ecken befindliche) Heizelemente 2 der Vorrichtungen 13 genutzt werden. Dabei sind wiederum in Fig. 8 die genutzten Heizelemente 2 durch schwarze Punkte in der Mitte der Vorrichtungen 13 gekennzeichnet.

Es kann jedoch auch vorgesehen sein, dass bei einer Anordnung wie aus den Figuren 7 und 8 bekannt, nicht jede Aufnahmevorrichtung für eine erfindungsgemäße Vorrichtung 13 (durch Bohrungen 26 ausgeführt) auch tatsächlich mit einer erfindungsgemäßen Vorrichtung 13 besetzt wird, wie durch Fig. 9a gezeigt ist. Auch hier kann wiederum eine Gruppe 15 an Vorrichtungen 13 gewählt werden. Der in Fig. 9a angedeutete Schnitt A-A ist durch die Fig. 9b gezeigt.

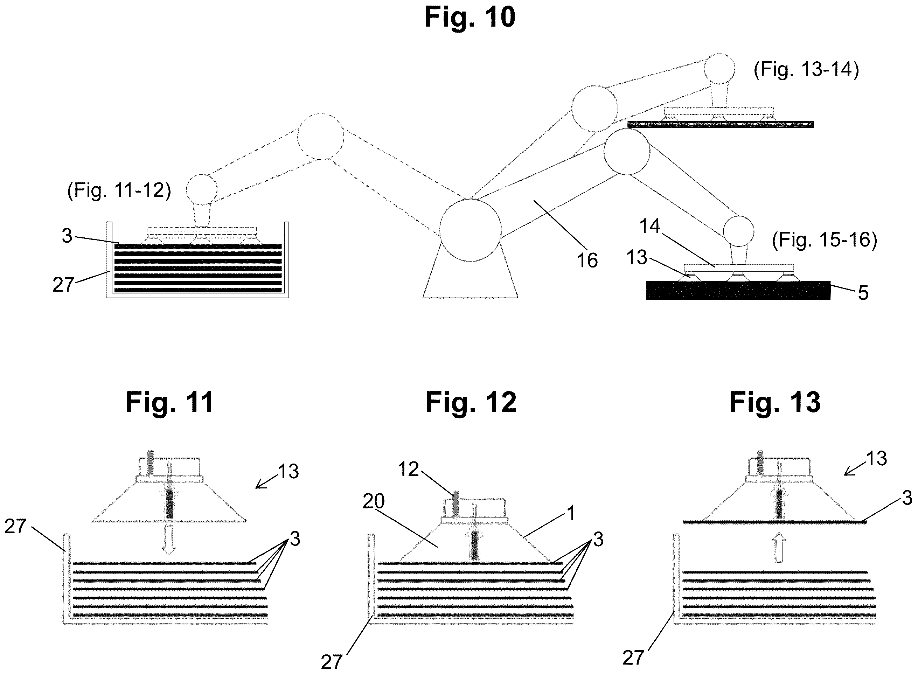

Fig. 10 zeigt ein Handhabungsgerät 16, welches über eine Trägerstruktur 14 mit Vorrichtungen 13 verfügt, mit denen ein flächiges thermoplastisches Material 3 aufgenommen, transportiert und auf einem Fügepartner 5 abgelegt werden kann. Diese Verfahrensschritte werden im Weiteren durch die Figuren 11 bis 16 im Detail erklärt.

So wird in einem ersten Verfahrensschritt wie durch Fig. 11 gezeigt eine Vorrichtung 13 zum Handhaben und lokalen Fixieren von flächigen thermoplastischen Materialien 3 mit einem flächigen thermoplastischen Material 3, welches sich in dieser Figur in einem Magazin 27 befindet, in Kontakt gebracht.

In weiterer Folge (durch Fig. 12 gezeigt) wird über die Absaugvorrichtung 12 ein Vakuum in einem inneren Raum 20 der Haltevorrichtung 1 aufgebaut, sodass die Haltevorrichtung 1 mit dem flächigen thermoplastischen Material 3 in Verbindung steht, genauer gesagt, das flächige thermoplastische Material 3 durch den Unterdruck im Raum 20 an der Haltevorrichtung 1 gehalten wird.

In einem nächsten Verfahrensschritt (siehe Fig. 13) kann das flächige thermoplastische Material 3 aus dem Magazin 27 durch die Vorrichtung 13 abgehoben werden.

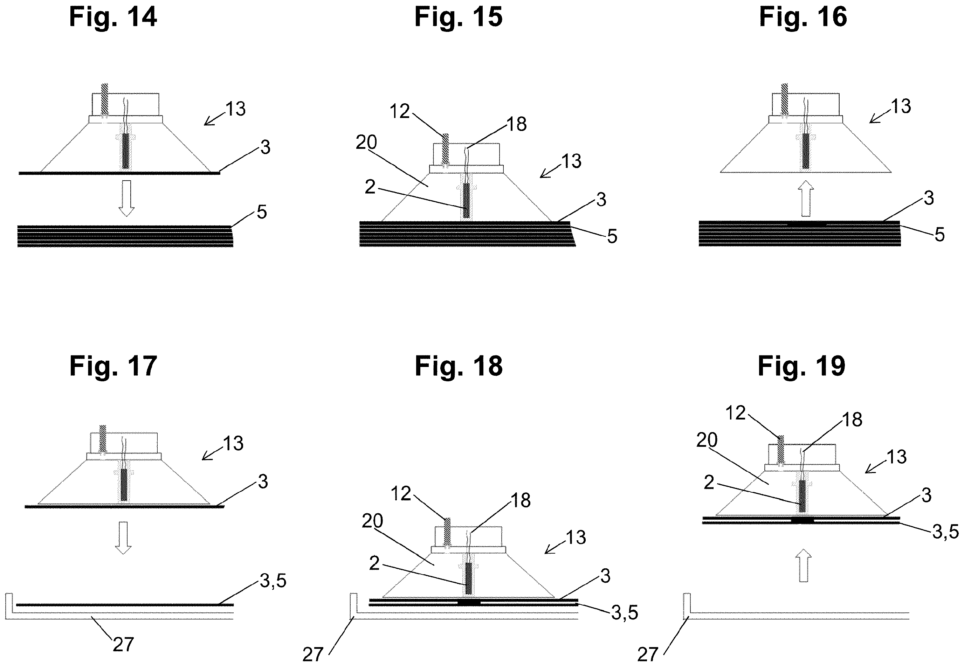

In Fig. 14 ist gezeigt, wie anschließend das flächige thermoplastische Material 3 mit einem Fügepartner 5 mittels einer Vorrichtung 13 in Kontakt gebracht werden kann.

In einem folgenden Verfahrensschritt (Fig. 15), wenn das flächige thermoplastische Material 3 nun mit einem Fügepartner 5 durch die Vorrichtung 13 in Kontakt gebracht wurde, kann mittels der Heizvorrichtung 2 thermische Energie in das flächige thermoplastische Material 3 eingebracht werden, sodass das flächige thermoplastische Material 3 auf einen Fügepartner 5 aufgeschmolzen wird und somit lokal thermisch fixiert wird. Um das ungewollte Verrutschen des flächigen thermoplastischen Materials 3 während dieses Fixiervorganges zu verhindern wird weiterhin während dieses Fixiervorganges das flächige thermoplastische Material 3 durch die Vorrichtung 13 gehalten, indem - wie in diesem Ausführungsbeispiel gezeigt - in einem inneren Raum 20 ein Unterdruck aufrecht gehalten wird. Um nach dem Fixiervorgang das flächige thermoplastische Material 3 von der Vorrichtung 13 zu lösen, kann über die Absaugvorrichtung 12 ein Druckausgleich des Raumes 20 mit der Umgebung vorgenommen werden, sodass keine Haltekraft mehr durch die Vorrichtung 13 auf das flächige thermoplastische Material 3 ausgeübt wird. Es kann auch vorgesehen sein, dass durch das Heizelement 2 auch schon vor Kontakt mit dem Fügepartner 5 thermische Energie in das flächige thermoplastische Material 3 eingebracht wird, beispielsweise während eines Transportvorganges oder auch schon bei der Aufnahme.

In einem letzten Schritt des Verfahrens (durch Fig. 16 gezeigt) wird nun die Vorrichtung 13 vom flächigen thermoplastischen Material 3 gelöst und das Verfahren kann von vorne beginnen - beispielsweise durch wiederholen der Verfahrensschritte von Fig. 11 bis Fig. 16.

Jedoch ist es nunmehr auch möglich, durch ein Ausführungsbeispiel der erfindungsgemäßen Vorrichtung 13 ein flächiges thermoplastisches Material 3 auf ein weiteres flächiges thermoplastisches Material 3 aufzulegen, aufzuschmelzen und anschließend beide flächigen thermoplastischen Materialien 3 anzuheben, wie in den Figuren 17 bis 19 gezeigt. Dabei wird in einem ersten Verfahrensschritt ein flächiges thermoplastisches Material 3 durch die Vorrichtung 13 an ein weiteres in einem Magazin 27 befindliches flächiges thermoplastisches Material 3 heranbewegt, wobei das im Magazin 27 befindliche flächige thermoplastische Material 3 in diesem konkreten Beispiel als Fügepartner 5 fungiert. Nach Aufsetzen des gehaltenen flächigen thermoplastischen Materials 3 auf das im Magazin 27 befindliche flächige thermoplastische Material 3 kann durch das Heizelement 2 Wärmeenergie in das gehaltene flächige thermoplastische Material 3 eingebracht werden und dieses somit lokal an dem im Magazin 27 befindliche flächige thermoplastische Material 3 fixiert werden, wie durch die Fig. 18 gezeigt ist.

In einem letzten Verfahrensschritt kann nun durch die Vorrichtung 13 das erste flächige thermoplastische Material 3 wieder angehoben werden, welches nun mit seinem Fügepartner 5 - dem zweiten flächigen thermoplastischen Material 3 verbunden ist - und somit auch dieses aus dem Magazin 27 angehoben werden.

### Bezugszeichenliste:

1 Haltevorrichtung
2 Heizelement
3 Flächiges thermoplastisches Material
4 Haltebereich
5 Fügepartner
6 Federelement
7 Isolierende Schicht
8 Elektrostatischer Greifer
9 Kontaktfläche
10 Vakuum-Sauggreifer
11 Saugbereich
12 Absaugvorrichtung
13 Vorrichtung
14 Trägerstruktur
15 Gruppe an Vorrichtungen
16 Handhabungsgerät
17 Heizpatrone
18 Stromkabel
19 Aufnahmehülse
20 Raum
21 Montagevorrichtung
22 Heißgasdüse
23 Induktionsspule
24 Heizstempel
25 Elektrostatikfolie
26 Bohrung
27 Magazin
28 Zuführkanal

## Patentansprüche

1. Vorrichtung zum Handhaben und lokalen Fixieren von flächigen thermoplastischen Materialien (3), mit wenigstens einer Haltevorrichtung (1), welche mit einem Haltebereich (4) zur Ausübung einer Haltekraft an einer Oberfläche des flächigen thermoplastischen Materials (3) anlegbar ist, **dadurch gekennzeichnet, dass** innerhalb oder umgeben durch den Haltebereich (4) der wenigstens einen Haltevorrichtung (1) zumindest ein Heizelement (2) angeordnet ist, durch welches das flächige thermoplastische Material (3) innerhalb oder umgeben durch den Haltebereich (4) der wenigstens einen Haltevorrichtung (1) an einem Fügepartner (5) lokal thermisch fixierbar ist.

2. Vorrichtung nach dem vorangegangenen Anspruch, **dadurch gekennzeichnet, dass** das flächige thermoplastische Material (3) in einem durch die wenigstens eine Haltevorrichtung (1) gehaltenen Zustand an dem Fügepartner (5) lokal thermisch fixierbar ist.

3. Vorrichtung nach einem der vorangegangenen Ansprüche, **dadurch gekennzeichnet, dass** das zumindest eine Heizelement (2) - vorzugsweise durch ein Federelement (6) - bewegbar mit der wenigstens einen Haltevorrichtung (1) verbunden ist.

4. Vorrichtung nach einem der vorangegangenen Ansprüche, **dadurch gekennzeichnet, dass** das flächige thermoplastische Material (3) durch das zumindest eine Heizelement (2) kontinuierlich oder intervallartig beheizbar ist.

5. Vorrichtung nach einem der vorangegangenen Ansprüche, **dadurch gekennzeichnet, dass** zwischen dem zumindest einen Heizelement (2) und der wenigstens einen Haltevorrichtung (1) zumindest bereichsweise eine isolierende Schicht (7) vorgesehen ist.

6. Vorrichtung nach einem der vorangegangenen Ansprüche, **dadurch gekennzeichnet, dass** die wenigstens eine Haltevorrichtung (1) als ein elektrostatischer Greifer (8) ausgebildet ist, wobei durch wenigstens eine Aktivierungsvorrichtung eine elektrostatische Ladung einer Kontaktfläche des elektrostatischen Greifers (8) aufbringbar oder veränderbar ist.

7. Vorrichtung nach einem der vorangegangenen Ansprüche, **dadurch gekennzeichnet, dass** die wenigstens eine Haltevorrichtung (1) als ein Vakuum-Sauggreifer (10) ausgebildet ist.

8. Vorrichtung nach dem vorangegangenen Anspruch, **dadurch gekennzeichnet, dass** das zumindest eine Heizelement (2) in einem Saugbereich (11) des Vakuum-Saugreifers (10) angeordnet ist.

9. Vorrichtung nach einem der Ansprüche 7 oder 8, **dadurch gekennzeichnet, dass** der Vakuum-Saugreifer (10) über eine Absaugvorrichtung (12) verfügt, wobei durch die Absaugvorrichtung (12) ein Unterdruck in einem Saugbereich (11) des Vakuum-Saugreifers (10) erzeugbar ist.

10. Anordnung von wenigstens zwei Vorrichtungen (13) zum Handhaben und lokalen Fixieren von flächigen thermoplastischen Materialien (3) nach einem der vorangegangenen Ansprüche, **dadurch gekennzeichnet, dass** wenigstens zwei Vorrichtungen (13) durch eine Trägerstruktur (14) miteinander verbunden sind.

11. Anordnung nach dem vorangegangenen Anspruch, **dadurch gekennzeichnet, dass** die wenigstens zwei Vorrichtungen (13) dermaßen angeordnet sind, dass wenigstens ein flächiges thermoplastisches Material (3), durch die wenigstens zwei Haltevorrichtungen (1), einseitig kontaktierend entlang einer Fläche haltbar ist.

12. Anordnung nach einem der Ansprüche 10 oder 11, **dadurch gekennzeichnet, dass** eine Steuer- oder Regeleinheit vorgesehen ist, wobei durch die Steuer- oder Regeleinheit jede Vorrichtung (13) oder bei Vorliegen von mehr als zwei Vorrichtungen (13) eine Gruppe (15) an Vorrichtungen (13) selektiv steuer- oder regelbar ist, wobei durch die Steuer- oder Regeleinheit wenigstens eine Haltevorrichtung (1) selektiv steuer- oder regelbar ist und/oder wenigstens ein Heizelement (2) selektiv steuer- oder regelbar ist.

13. Handhabungsgerät zum Aufnehmen, Transportieren und/oder Ablegen wenigstens eines flächigen thermoplastischen Materials (3) mit wenigstens einer Vorrichtung (13) nach einem der Ansprüche 1 bis 9 und/oder einer Anordnung nach einem der Ansprüche 10 oder 12.
